# EUROPÄISCHE PATENTSCHRIFT

(11) **EP 1 051 314 B1**
(45) Veröffentlichungstag und Bekanntmachung des Hinweises auf die Patenterteilung: **02.11.2005**
(21) Anmeldenummer: 99950476.4
(22) Anmeldetag: 30.07.1999
(51) Int. Cl.: B60S 1/38

(54) **WISCHBLATT ZUM REINIGEN VON SCHEIBEN AN KRAFTFAHRZEUGEN**
WIPER BLADE FOR CLEANING THE WINDOW PANES OF MOTOR VEHICLES
RACLETTE D'ESSUIE-GLACE POUR LE NETTOYAGE DES VITRES SUR DES VEHICULES AUTOMOBILES

(30) Priorität: 07.12.1998 DE 19856280
(43) Veröffentlichungstag der Anmeldung: 15.11.2000
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/002353
(87) Internationale Veröffentlichungsnummer: WO 2000/034088

(56) Entgegenhaltungen:
- EP-A- 0 490 833
- WO-A-93/14958

## Beschreibung

### Stand der Technik

Die Erfindung geht aus von einem Wischblatt nach dem Oberbegriff des Anspruchs 1.

Bei Scheibenwischanlagen für Kraftfahrzeuge ist im allgemeinen auf einer Antriebsachse ein Befestigungsteil befestigt, mit dem über eine Achse ein Gelenkteil verbunden ist. An das Gelenkteil schließt sich eine Wischstange an, in die ein Wischblatt eingehängt ist. Das Wischblatt weist ein mehrgliedriges Tragbügelsystem auf mit an einem Hauptbügel angelenkten Zwischenbügeln, mit deren Enden Krallenbügel gelenkig verbunden sind, die an ihren Enden Haltekrallen aufweisen. Von den Haltekrallen wird eine Wischleiste gehalten. Das Tragbügelsystem ermöglicht, daß sich die Wischleiste einer gekrümmten Scheibe beim Wischen anpaßt. Um einen gleichmäßigen Auflagedruck der Wischleiste auf der Scheibe zu erreichen, ist in das Gummiprofil der Wischleiste eine Federschiene eingelegt.

Wird die Scheibenwischanlage betätigt, gleitet die Wischleiste über die Kraftfahrzeugscheibe und unterliege dabei einem unvermeidbaren Verschleiß, der die Reinigungsqualität mindert. Die Wischleiste muß daher von Zeit zu Zeit ersetzt werden. Da das Tragbügelsystem des Wischblatts in aller Regel noch voll funktionsfähig ist, wird dem Endverbraucher ein sogenannter Nachfüllsatz angeboten. In das alte Tragbügelsystem wird eine neue Wischleiste eingeschoben.

Aus der DE 195 22 273 A1 ist ein Wischblatt bekannt, in das ein Nachfüllsatz eingebracht werden kann, der eine Wischleiste mit einer Federschiene und einen Sicherungskörper aufweist. Die Federschiene ist in einer Kopfleiste der Wischleiste in einem rundum geschlossenen, an den Endflächen der Wischleiste mündenden Längskanal angeordnet. Auf ein Ende der Kopfleiste ist der Sicherungskörper aufgeschoben und greift mit zwei die Kopfleiste umfassenden Schenkeln in Längsnuten an zwei gegenüberliegenden Längsseiten der Kopfleiste.

Der Sicherungskörper weist ferner eine Spannklammer auf, die Kanalwände der Kopfleiste in Ausnehmungen der Federschiene drückt und den Sicherungskörper, die Federschiene und die Wischleiste in Längsrichtung zueinander fixiert. Nachdem die abgenutzte Wischleiste aus dem Wischblatt entfernt ist, kann der vormontierte Nachfüllsatz in die Haltekrallen des Tragbügelsystems des Wischblatts eingeschoben werden, wobei die Haltekrallen in die Längsnuten der Wischleiste greifen. Der Sicherungskörper hat neben der Spannklammer eine Federklammer mit auslenkbaren Federarmen und daran angeordneten Haken. Ist der Nachfüllsatz nahezu vollständig in die Haltekrallen eingeschoben, werden die Haken der Federklammer von einer am äußeren Ende des Tragbügelsystems angeordneten Haltekralle ausgelenkt und rasten in Montagerichtung nach der Haltekralle ein, daß der Sicherungskörper zu beiden Seiten an der Haltekralle anliegt und die Wischleiste in Längsrichtung am Tragbügelsystem fixiert.

Die Federklammer wird mit einem Stanz- oder einem sonstigen Schneideverfahren nach oder vor einem Biegevorgang aus einem größeren Blechteil herausgetrennt. Die Haken werden durch eine in die geschnittene Außenkontur des Blechteils eingebrachte rechtwinklige Stufe gebildet, die sich nach dem Biegevorgang im montierten Zustand in die von der Scheibe abgewandte Richtung erstreckt.

Je dünner das Blech ist, um so schärfere Kanten entstehen an der geschnittenen Außenkontur, die nur mit großem Aufwand und häufig nicht vollständig entfernt werden können. Bei der Demontage des Nachfüllsatzes muß bei der beschriebenen Federklammer auf die geschnittene Außenkontur im Bereich der Haken gedrückt werden, um diese auszurasten. Hierbei können die scharfen Außenkonturen zu Verletzungen führen. Ferner besteht eine verletzungsgefahr nicht nur bei der Demontage, sondern bei der Montage, wie auch bei Reinigungsarbeiten.

Mit der EP 0490833 A 1 ist ein Wischerarm bekannt geworden, an dem ein gattungsgemäßes Wischblatt angelegt ist und der eine Wischleiste dadurch verliersicher hält, dass vor einer Stirnseite der Wischleiste ein an einem Tragbügelsystem des Wischblatts befestigter Bügel angeordnet ist, der einen Anschlag für die Wischleiste in eine Längsrichtung bildet und aus einer Schließstellung in eine Offenstellung bewegbar ist. Um die Offen- bzw. Geschlossenstellung zu arretieren, sind aufwändige Rastmittel vorgesehenen.

### Vorteile der Erfindung

Bei der erfindungsgemäßen Lösung nach den Merkmalen des Anspruchs 1 ist zumindest vor einer Stirnseite der Wischleiste ein am Tragbügelsystem befestigter Bügel angeordnet, der einen Anschlag für die Wischleiste in eine Längsrichtung bildet und zur Demontage und Montage aus einer Schließstellung in eine Öffnungsstellung bewegbar ist. Eine in der Wischleiste angeordnete Federschiene kann vorteilhaft mit einem konstanten Querschnitt ohne Aussparungen ausgeführt werden. Fertigungsschritte zum Einbringen der Aussparungen in die Federschiene und damit verbundene Kosten werden eingespart. Die Wischleiste kann einfach ohne Werkzeuge und ohne Verletzungsgefahr demontiert und montiert werden. Ferner kann die Wischleiste in Längsrichtung verschiebbar und um die Längsachse schwenkbar in den Haltekrallen gelagert werden. In eine zweite Längsrichtung kann die Wischleiste durch eine in Längsrichtung nach außen geschlossene Haltekralle, durch einen Anschlag in der Haltekralle usw. oder vorteilhaft durch einen zweiten bewegbaren Bügel gesichert werden. Mit zwei Bügeln ist die Wischleiste von beiden Seiten montiertbar und demontierbar. Ferner können die Anzahl verschiedener Bauteile und die Kosten reduziert werden.

Um zu vermeiden, daß der Bügel bei der Montage und der Demontage verloren geht, ist diese verliersicher über ein Gelenk mit einer Haltekralle des Tragbügelsystems verbunden. Ober das Gelenk ist der Bügel aus der Schließstellung in die Öffnungsstellung und umgekehrt schwenkbar. In einer Ausgestaltung der Erfindung ist der Bügel in der Schließstellung und/oder in der Öffnungsstellung über lösbare Rastmittel fixiert. Die Rastmittel stellen sicher, daß der Bügel während des Betriebs geschlossen und bei der Montage und der Demontage geöffnet bleibt. Durch einen in der Öffnungsstellung fixierten Bügel wird vermieden, daß der Bügel während der Montage und der Demontage in die Schließstellung klappt. Die Montage und die Demontage werden erleichtert. Der Bügel Umgreift die Haltekralle seitlich mit zwei Flanken und ist vorteilhaft mit Zapfen an den Flanken in Öffnungen der Haltekralle gelenkig gelagert. Es können konventionelle Haltekrallen verwendet und mit Öffnungen versehen werden. Der Bügel kann jedoch auch auf Zapfen gelagert sein, die an der Haltekralle befestigt sind. Die Flanken des Bügels sind elastisch auszuführen und die Elastizität für die Rastmittel zu nutzen. Es wird mit wenigen Bauteilen ein großer Federweg für die Rastmittel und ein sicherer Halt ermöglicht- Vorteilhaft rasten an den Flanken angeordnete Vorsprünge in Schließstellung an einer unteren, einer Windschutzscheibe zugewandten Kante der Haltekralle und in der Öffnungsstellung an einer oberen, der Windschutzscheibe abgewandten Kante der Haltekralle ein, wodurch zusätzliche Öffnungen für die Rastmittel und Fertigungsschritte gespart und konventionelle Haltekrallen verwendet werden können.

In der Schließstellung und in der Öffnungsstellung kann der Bügel allein durch Rastmittel oder unterstützend durch eine Anschlagfläche fixiert und gehalten werden, auf der der Bügel in der entsprechenden Stellung zum liegen kommt. Ein Überdrücken der Rastmittel bei der Montage und der Demontage wird vermieden, die Rastmittel können kleiner und kostengünstiger ausgeführt werden und der Halt wird verbessert. Ferner können sich die Rastmittel und die Anschlagflächen günstig ergänzen, indem der Bügel in eine Richtung, in die Schließrichtung oder in die Öffnungsrichtung des Bügels, durch die Anschlagfläche und in eine zweite Richtung durch die Rastmittel begrenzt wird.

Die Rastmittel können durch elastisch verformbare Vorsprünge an der Haltekralle und/oder am Bügel gebildet sein, die beim Einrasten elastisch ausgelenkt werden und in Öffnungen und/oder hinter Kanten greifen. Um den Bügel leichter öffnen und/oder schließen zu können, wird vorgeschlagen an den Vorsprüngen in Öffnungsrichtung und/oder in Schließrichtung Schrägen vorzusehen.

Zum freien Ende der Flanken nimmt der mögliche Federweg und der Hebelarm einer angreifenden Kraft zu und damit das maximale Biegemoment. Es wird vorgeschlagen, die Vorsprünge zum freien Ende quer zur Längsrichtung länger auszuführen. Die Vorsprünge zum freien Ende hintergreifen die Kanten der Haltekralle mit einer großen Länge und führen zu einem sicheren Halt.

Um zu vermeiden, daß der Bügel beim Einrastvorgang mit den Zapfen aus den Öffnungen der Haltekralle rutscht, sind die Zapfen länger als der maximale Federweg der Flanken im Bereich der Zapfen beim Öffnen und Schließen des Bügels. Ferner sind die Flanken in den in der Schließstellung und/oder in der Öffnungsstellung vorgespannt und führen durch einen Kraftschluß zu einem spielfreien Halt des Bügels.

Der Bügel kann aus einem Blech geformt oder aus Kunststoff gegossen sein. Kunststoff ist besonders leicht, kostengünstig und korrosionsbeständig.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen vergrößerten Ausschnitt eines Wischblatts von der Seite,
- Fig. 2: einen Ausschnitt II in Fig. 1 schräg von unten,
- Fig. 3: einen Bügel,
- Fig. 4: eine Haltekralle,
- Fig. 5: einen Bügel in Schließstellung auf einer Haltekralle,
- Fig. 6: einen Schnitt entlang der Linie VI-VI in Fig. 5,
- Fig. 7: einen Schnitt entlang der Linie VII-VII in Fig. 5,
- Fig. 8: einen Schnitt entlang der Linie VIII-VIII in Fig. 5,
- Fig. 9: einen Schnitt entlang der Linie IX-IX in Fig. 5,
- Fig. 10 u. 11: Varianten nach Fig. 8,
- Fig. 12: eine Variante nach Fig. 3,
- Fig. 13: einen Bügel auf einer Haltekralle in Öffnungsstellung,
- Fig. 14: einen Ausschnitt eines Wischblatts mit eingeschobener Wischleiste und offenem Bügel und
- Fig. 15: den Ausschnitt II in Fig. 1 schräg von oben.

### Beschreibung der Ausführungsbeispiele

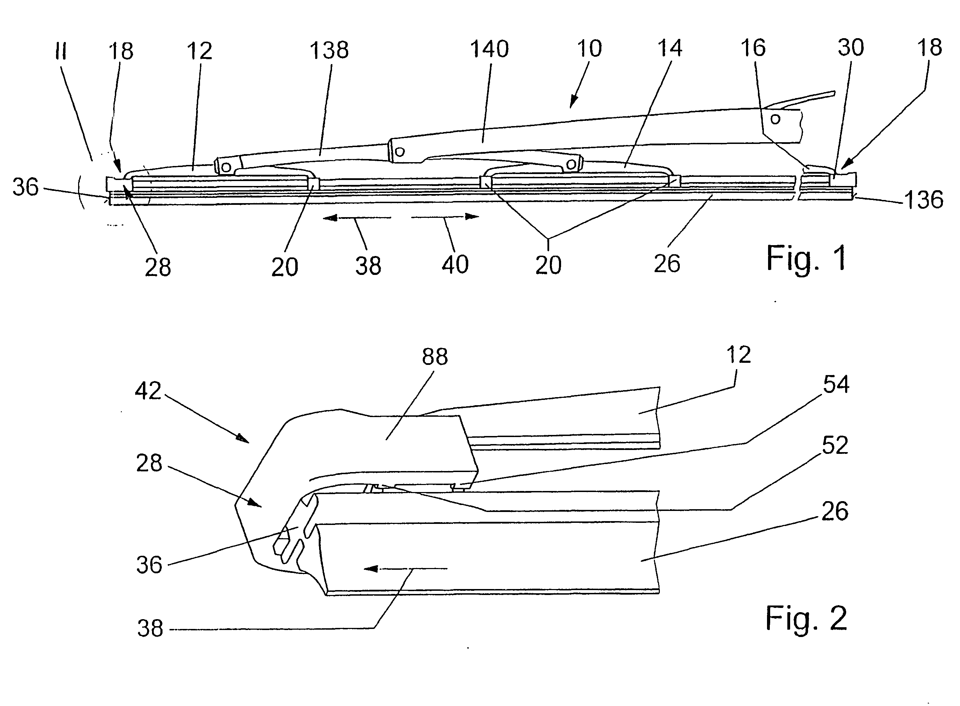

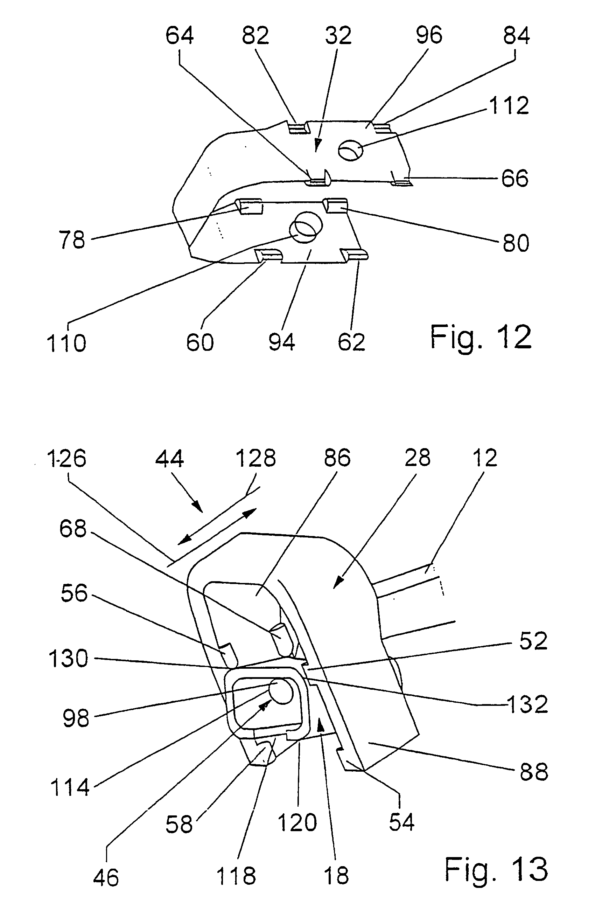

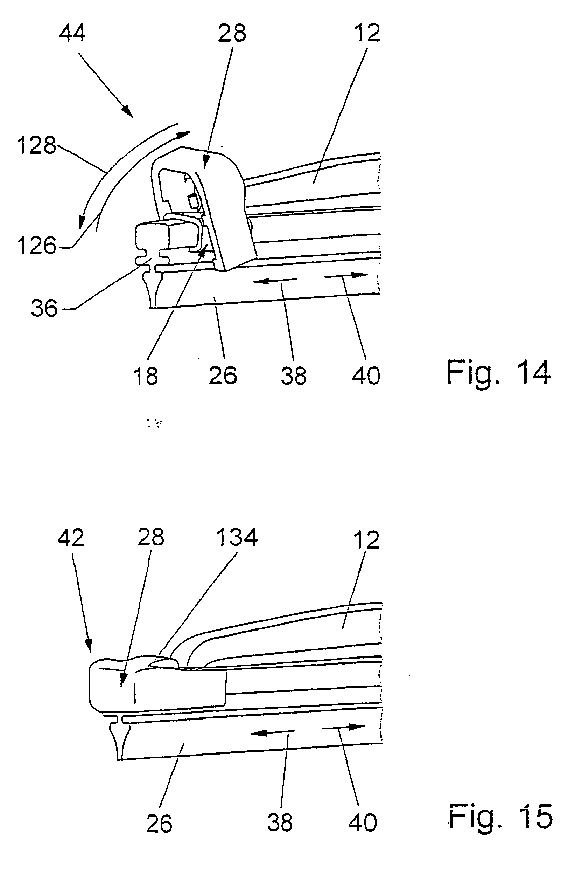

Fig. 1 zeigt einen Ausschnitt eines Wischblatts, das ein Tragbügelsystem 10 aufweist mit einem Hauptbügel 140, der gelenkig mit Zwischenbügeln 138 verbunden ist, an dessen Enden Krallenbügel 12, 14, 16 angelenkt sind. In Haltekrallen 18, 20 der Krallenbügel 12, 14, 16 ist eine Wischleiste 26 gehalten. Vor beiden Stirnseiten 36, 136 der Wischleiste 26 ist jeweils ein Bügel 28, 30 angeordnet, die jeweils einen Anschlag für die Wischleiste 26 in Längsrichtung 38 und 40 bilden bzw. verhindern, daß die Wischleiste 26 in Längsrichtung 38, 40 aus den Haltekrallen 18, 20 rutscht. Die Bügel 28, 30 können zur Montage und Demontage der Wischleiste 26 aus einer Schließstellung 42 (Fig. 1, 2, 5 und 15) in eine Öffnungsstellung 44 (Fig. 13 und 14) geschwenkt werden. Die Bügel 28, 30 sind entsprechend gleich ausgeführt. Im weiteren werden Details und Funktionen der Bügel 28, 30 am Bügel 28 beschrieben.

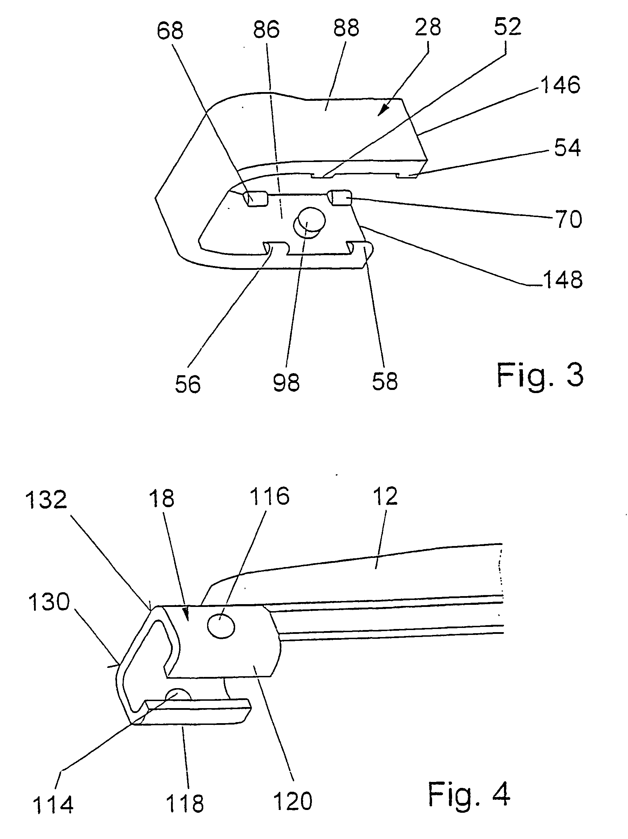

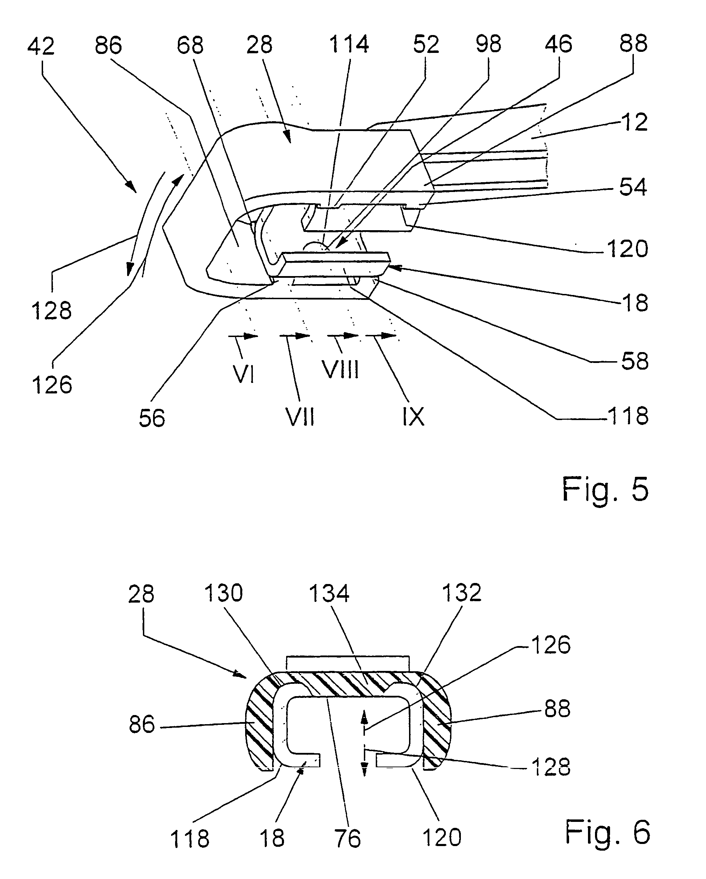

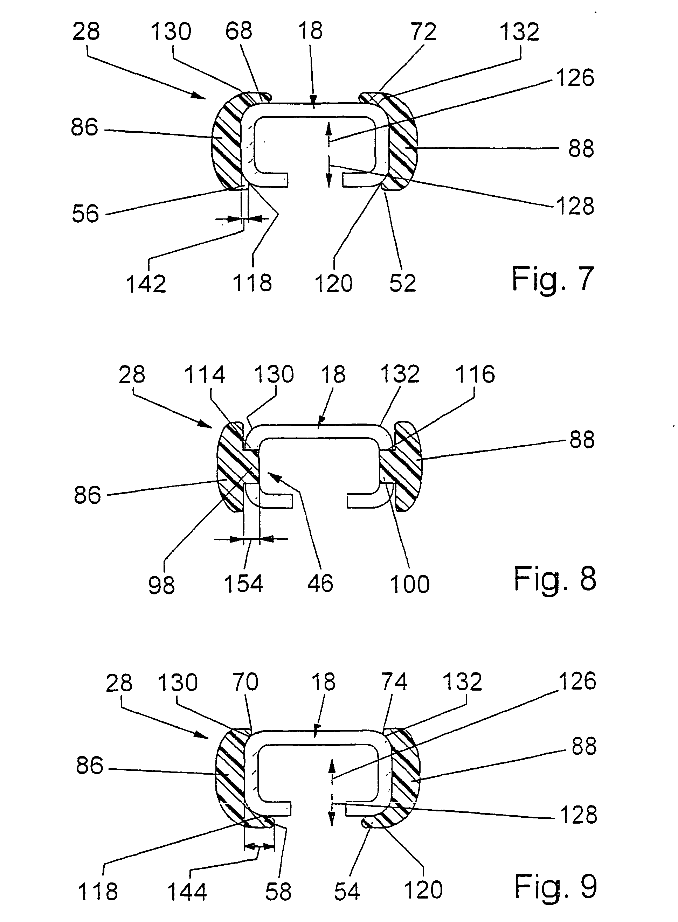

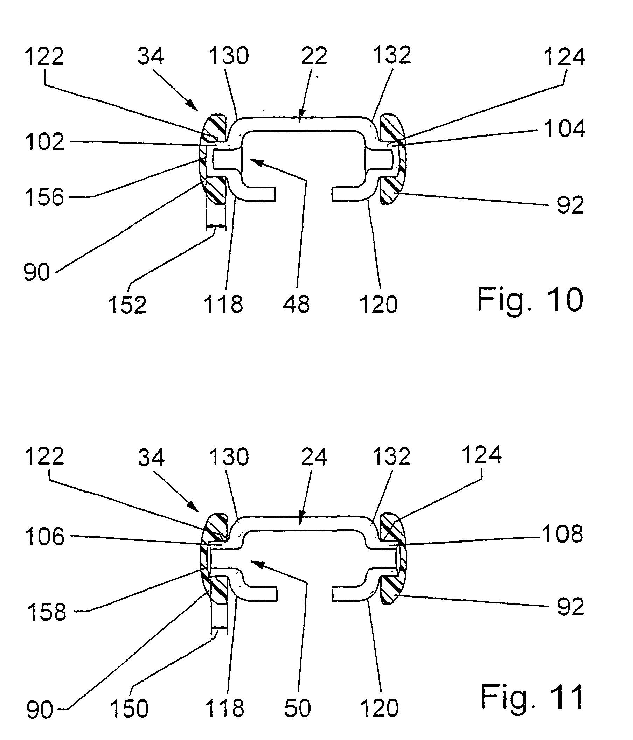

Der Bügel 28 umgreift die Haltekralle 18 mit zwei Flanken 86, 88 seitlich und ist mit den Flanken 86, 88 verliersicher über ein Gelenk 46 mit der Haltekralle 18 verbunden (Fig. 5 und 8). Das Gelenk 46 wird von an den Flanken 86, 88 angeordneten Zapfen 98, 100 und von Öffnungen 114, 116 in der Haltekralle 18 gebildet, in denen die Zapfen 98, 100 gelagert sind (Fig. 3, 4, 5 und 8). Ferner ist möglich, daß Zapfen 102, 104, 106, 108 einer Haltekralle 22, 24 in in Flanken 90, 92 eingebrachten Öffnungen 122, 124 gelagert sind, wie bei Gelenk 48, 50 in Fig. 10 und 11. Die Zapfen 102, 104, 106, 108 können mit einer offenen oder mit einer geschlossenen Stirnseite 156, 158 ausgeführt sein. Um die Montage des Bügels an der Haltekralle zu erleichtern, können an den Zapfen und/oder an der Haltekralle Montageschrägen angebracht sein.

In der Schließstellung 42 und in der Öffnungsstellung 44 ist der Bügel 28 über Rastmittel fixiert. Die Rastmittel werden durch die elastisch quer zur Längsrichtung 38, 40 auslenkbaren Flanken 86, 88 und durch an den Flanken 86, 88 angeformte Vorsprünge 52, 54, 56, 58 gebildet (Fig. 3, 5, 7 und 9). Die Vorsprünge 52, 54, 56, 58 sind in der Schließstellung 42 an einer unteren Kante 118, 120 der Haltekralle 18 eingerastet und stellen sicher, daß sich der Bügel 28 nicht ungewollt während des Betriebs öffnet und die Wischleiste 26 aus den Haltekrallen 18, 20 rutscht. Der Bügel 28 wird in Öffnungsrichtung 126 durch die Vorsprünge und in Schließrichtung 128 durch Anschlagflächen 68, 70, 72, 74, 76 fixiert. Die Anschlagflächen 68, 70, 72, 74 werden durch Vorsprünge an den Flanken 86, 88 und die Anschlagfläche 76 wird durch eine Deckwand 134 des Bügels 28 gebildet, die auf der Wischleiste 26 zum liegen kommt (Fig. 3, 5, 6, 7 und 9). In Richtung der freien Enden 146, 148 der Flanken 86, 88 nimmt der mögliche maximale Federweg und der Hebelarm einer angreifenden Kraft zu. Ausgehend von dieser Erkenntnis und um einen sicheren Halt zu erreichen, ist die Länge 144 der Vorsprünge 54, 58 zum freien Ende 146, 148 der Flanken 86, 88 größer als die Länge 142 der Vorsprünge 52, 56 (Fig. 7 und 8). Um den Bügel 28 zur Demontage und Montage leicht öffnen zu können, besitzen die Vorsprünge 52, 54, 56, 58 in Öffnungsrichtung 126 Schrägen. Ferner wird das Öffnen und Schließen des Bügels 28 durch die abgerundeten Kanten 118, 120, 130, 132 der Haltekralle 18 unterstützt.

Wird der Bügel 28 aus der Schließstellung 42 in Öffnungsrichtung 126 geschwenkt, werden die Flanken 86, 88 quer zur Längsrichtung 38, 40 nach außen ausgelenkt. In der Öffnungsstellung 44 (Fig. 13) rasten die Vorsprünge 52, 56 an einer oberen Kante 130, 132 der Haltekralle 18 ein und stellen sicher, daß der Bügel 28 während der Montage und der Demontage geöffnet bleibt (Fig. 13).

Um sicher zu stellen, daß der Bügel 28, 34 über das Gelenk 46, 48, 50 verliersicher befestigt ist, während er Bügel 28, 34 geöffnet und geschlossen wird, besitzen die Zapfen 98, 100, 102, 104, 106, 108 eine größere Länge 150, 152, 154 als ein maximaler Federweg der Flanken 86, 88, 90 quer zur Längsrichtung 38, 40 im Bereich der Zapfen 98, 100 102, 104, 106, 108 beim Öffnen und Schließen bzw. beim Einrastvorgang (Fig. 8, 10 und 11). Die Flanken 86, 88, 90, 92 sind in der Schließstellung 42 und in der Öffnungsstellung 44 quer zur Längsrichtung 38, 40 nach außen ausgelenkt und vorgespannt. Der Bügel 28 ist in der Schließstellung 42 und in der Öffnungsstellung 44 neben einem Formschluß durch die Vorsprünge 52, 54, 56, 58 und die Anschlagflächen 68, 70, 72, 74, 76 durch einen Kraftschluß spielfrei an der Haltekralle 18 befestigt. Vibrationen und Geräusche des Bügels 28 werden vermieden.

Der Bügel 28 ist aus Kunststoff, kann jedoch aus Metall gebildet sein. In Fig. 12 ist ein aus Blech geformter Bügel 32 dargestellt, der zwei Flanken 94, 96 mit Zapfen 110, 112, Vorsprüngen 60, 62, 64, 66 und Anschlagflächen 78, 80, 32, 84 aufweist. Aufbau und Funktion des Bügels 32 sind gleich wie beim Bügel 28.

In der Öffnungsstellung 44 des Bügels 28 wird die Wischleiste 26 in die Haltekrallen 18, 20 in Längsrichtung 40 eingeschoben (Fig. 13 und 14). Der Bügel 28 wird aus der Öffnungsstellung 44 in Schließrichtung 128 geschwenkt und rastet in der Schließstellung 42 ein, wodurch die Wischleiste 26 montiert und verliersicher gehalten ist (Fig. 14 und 15).

### Bezugszeichen

- 10: Tragbügelsystem
- 12: Krallenbügel
- 14: Krallenbügel
- 16: Krallenbügel
- 18: Haltekralle
- 20: Haltekralle
- 22: Haltekralle
- 24: Haltekralle
- 26: Wischleiste
- 28: Bügel
- 30: Bügel
- 32: Bügel
- 34: Bügel
- 36: Stirnseite
- 38: Längsrichtung
- 40: Längsrichtung
- 42: Schließstellung
- 44: Öffnungsstellung
- 46: Gelenk
- 48: Gelenk
- 50: Gelenk
- 52: Vorsprung
- 54: Vorsprung
- 56: Vorsprung
- 58: Vorsprung
- 60: Vorsprung
- 62: Vorsprung
- 64: Vorsprung
- 66: Vorsprung
- 68: Anschlagfläche
- 70: Anschlagfläche
- 72: Anschlagfläche
- 74: Anschlagfläche
- 76: Anschlagfläche
- 78: Anschlagfläche
- 80: Anschlagfläche
- 82: Anschlagfläche
- 84: Anschlagfläche
- 86: Flanke
- 88: Flanke
- 90: Flanke
- 92: Flanke
- 94: Flanke
- 96: Flanke
- 98: Zapfen
- 100: Zapfen
- 102: Zapfen
- 104: Zapfen
- 106: Zapfen
- 108: Zapfen
- 110: Zapfen
- 112: Zapfen
- 114: Öffnung
- 116: Öffnung
- 118: Kante
- 120: Kante
- 122: Öffnung
- 124: Öffnung
- 126: Öffnungsrichtung
- 128: Schließrichtung
- 130: Kante
- 132: Kante
- 134: Deckwand
- 136: Stirnseite
- 138: Zwischenbügel
- 140: Hauptbügel
- 142: Länge
- 144: Länge
- 146: Ende
- 148: Ende
- 150: Zapfenlänge
- 152: Zapfenlänge
- 154: Zapfenlänge
- 156: Stirnseite
- 158: Stirnseite

## Patentansprüche

1. Wischblatt zum Reinigen von Scheiben an Kraftfahrzeugen mit einem Tragbügelsystem (10), das Krallenbügel (12, 14,16) mit Haltekrallen (18,20,22,24) aufweist, in denen eine Wischleiste (26) verliersicher gehalten ist, wobei zumindest vor einer Stirnseite (36,136) der Wischleiste (26) ein am Tragbügelsystem befestigter Bügel (28, 30, 32, 34) angeordnet ist, der einen Anschlag für die Wischleiste (26) in eine Längsrichtung (38, 40) bildet und aus einer Schließstellung (42) in eine Öffnungsstellung (44) bewegbar ist und der Bügel (28, 30, 32, 34) über ein Gelenk (46, 48, 50) mit einer Haltekralle (18, 22, 24) verbunden und verliersicher von der Schließstellung (42) in die Öffnungsstellung (44) schwenkbar ist und femer der Bügel (28,30, 32, 34) mit zwei Flanken (86, 88, 90, 92, 94, 96) die Haltekralle (18, 22, 24) seitlich umgreift und die Flanken (86, 88, 90, 92, 94, 96) gelenkig mit der Haltekralle (18, 22, 24) verbunden sind und wobei die Flanken (86, 88, 90, 92, 94, 96) elastisch verformbar sind und einen Teil von Rastmitteln bilden, **dadurch gekennzeichnet, dass** an den Flanken (86, 88, 94, 96) angeordnete Vorsprünge (52, 54, 56, 58, 60, 62, 64, 66) in der Schließstellung (42) an einer unteren Kante (118, 120) der Haltekralle (18, 22, 24) und in der Öffnungsstellung (44) an einer oberen Kante (130, 132) der Haltekralle (18, 22, 24) eingerastet sind.

2. Wischblatt nach Anspruch 1, **dadurch gekennzeichnet, daß** der Bügel (28, 30, 32, 34) über Rastmittel in der Schließstellung (42) und/oder in der Öffnungsstellung (44) fixiert ist.

3. Wischblatt nach Anspruch 2, **dadurch gekennzeichnet, daß** der Bügel (28, 30, 32, 34) in der Schließstellung (42) und/oder in der Öffnungsstellung (44) auf einer Anschlagfläche (68, 70, 72, 74, 76, 78, 80, 82, 84) aufliegt.

4. Wischblatt nach einem der Ansprüche 1 bis 3, **dadurch gekennzeichnet, daß** der Bügel (28, 30, 32) über Zapfen (98, 100, 110, 112) an den Flanken (86, 88, 94, 96) in Öffnungen (114, 116) der Haltekralle (18) gelagert ist.

5. Wischblatt nach einem der Ansprüche 1 bis 4, **dadurch gekennzeichnet, daß** die vorsprünge (52, 54, 56, 58, 60, 62, 64, 66) zum leichten Öffnen und/oder Schließen des Bügels (28, 30, 32) in Öffnungsrichtung (126) und/oder in Schließrichtung (128) eine Schräge aufweisen.

6. Wischblatt nach einem der Ansprüche 1 bis 5, **dadurch gekennzeichnet, daß** die Länge (142, 144) der Vorsprünge (52, 54, 56, 58) zum freien Ende (146, 148) der Flanken (86, 88) hin zunimmt.

7. Wischblatt nach einem der Ansprüche 1 bis 6, **dadurch gekennzeichnet, daß** die Zapfenlänge (150, 152, 154) größer ist als ein maximaler Federweg der Flanken (86, 88, 90, 92, 94, 96) im Bereich der Zapfen (98, 100) beim Öffnen und Schließen des Bügels (28, 30, 34).

8. Wischblatt nach einem der Ansprüche 1 bis 7, **dadurch gekennzeichnet, daß** die Flanken (86, 88, 90, 92, 94, 96) in der Schließstellung (42) und/öder in der Öffnungsstellung (44) vorgespannt und kraftschlüssig mit der Haltekralle (18, 22, 24) verbunden sind.

9. Wischblatt nach einem der vorhergehenden Ansprüche, **dadurch gekennzeichnet, daß** der Bügel (28, 30, 34) aus Kunststoff ist.

## Claims

1. Wiper blade for cleaning the window panes of motor vehicles, comprising a support lever system (10) which has claw-type yoke levers (12, 14, 16) with retaining claws (18, 20, 22, 24) in which a wiper strip (26) is held captively, in which arrangement a clip (28, 30, 32, 34) fastened to the support lever system is arranged at least in front of one end (36, 136) of the wiper strip (26), which clip forms a stop for the wiper strip (26) in a longitudinal direction (38, 40) and can be moved from a closed position (42) into an open position (44), and the clip (28, 30, 32, 34) is connected to a retaining claw (18, 22, 24) via a hinged joint (46, 48, 50) and can be pivoted captively from the closed position (42) into the open position (44), and, furthermore, the clip (28, 30, 32, 34) has two flanks (86, 88, 90, 92, 94, 96) engaging laterally around the retaining claw (18, 22, 24) and the flanks (86, 88, 90, 92, 94, 96) are connected in an articulated manner to 'the retaining claw (18, 22, 24), and in which arrangement the flanks (86, 88, 90, 92, 94, 96) are elastically deformable and form part of latching means, **characterized in that**, in the closed position (42), projections (52, 54, 56, 58, 60, 62, 64, 66) arranged on the flanks (86, 88, 94, 96) are latched into place at a lower edge (118, 120) of the retaining claw (18, 22, 24) and, in the open position (44), at an upper edge (130, 132) of the retaining claw (18, 22, 24).

2. Wiper blade according to Claim 1, **characterized in that** the clip (28, 30, 32, 34) is fixed in the closed position (42) and/or in the open position (44) via latching means.

3. Wiper blade according to Claim 2, **characterized in that** the clip (28, 30, 32, 34) rests on a stop face (68, 70, 72, 74, 76, 78, 80, 82, 84) in the closed position (42) and/or in the open position (44).

4. Wiper blade according to one of Claims 1 to 3, **characterized in that** the clip (28, 30, 32) is mounted in openings (114, 116) of the retaining claw (18) via studs (98, 100, 110, 112) on the flanks (86, 88, 94, 96).

5. Wiper blade according to one of Claims 1 to 4, **characterized in that** the projections (52, 54, 56, 58, 60, 62, 64, 66) have a ramp for easy opening and/or closing of the clip (28, 30, 32) in the opening direction (126) and/or in the closing direction (128).

6. Wiper blade according to one of Claims 1 to 5, **characterized in that** the length (142, 144) of the projections (52, 54, 56, 58) increases towards the free end (146, 148) of the flanks (86, 88).

7. Wiper blade according to one of Claims 1 to 6, **characterized in that** the stud length (150, 152, 154) is greater than a maximum spring travel of the flanks (86, 88, 90, 92, 94, 96) in the region of the studs (98, 100) during opening and closing of the clip (28, 30, 34).

8. Wiper blade according to one of Claims 1 to 7, **characterized in that** the flanks (86, 88, 90, 92, 94, 96) are prestressed in the closed position (42) and/or in the open position (44) and are connected in a non-positive manner to the retaining claw (18, 22, 24).

9. Wiper blade according to one of the preceding claims, **characterized in that** the clip (28, 30, 34) is made of plastic.

## Revendications

1. Balai d'essuie-glace pour nettoyer des vitres de véhicules automobiles comportant un système de palonniers (10) munis de palonniers (12, 14, 16) à griffes (18, 20, 22, 24), pour tenir la lame d'essuyage (26) de manière imperdable, dans lequel
au moins devant une face frontale (36, 136) de la lame d'essuyage (26) un étrier (28, 30, 32, 34) fixé au système de palonniers de support constitue une butée pour la lame d'essuyage (26) dans une direction longitudinale (38, 40) et peut être déplacé d'une position de fermeture (42) dans une position d'ouverture (44), l'étrier (28, 30, 32, 34) est relié par une articulation (46, 48, 50) à une griffe de retenue (18, 22, 24) et peut basculer de manière imperdable de la position de fermeture (42) à la position d'ouverture (44), et en outre l'étrier (28, 30, 32, 34) entoure latéralement par deux flancs (86, 88, 90, 92, 94, 96), les griffes de retenue (18, 22, 24) et les flancs (86, 88, 90, 92, 94, 96) sont reliés de manière articulée aux griffes de retenue (18, 22, 24),
les flancs (86, 88, 90, 92, 94, 96) étant déformables élastiquement et constituant une partie des moyens d'accrochage,
**caractérisé en ce que**
des saillies (52, 54, 56, 58, 60, 62, 64, 66) prévues sur les flancs (86, 88, 94, 96) s'accrochent en position de fermeture (42) contre une arête inférieure (118, 120) des griffes de retenue (18, 22, 24), et en position d'ouverture (44) contre une arête supérieure (130, 132) de ces griffes de retenue (18, 22, 24).

2. Balai d'essuie-glace selon la revendication 1,
**caractérisé en ce que**
l'étrier (28, 30, 32, 34) est fixé par des moyens d'accrochage en position de fermeture (42) et/ou en position d'ouverture (44).

3. Balai d'essuie-glace selon la revendication 2,
**caractérisé en ce que**
l'étrier (28, 30, 32, 34) est appliqué en position de fermeture (42) et/ou en position d'ouverture (44) sur une surface d'appui (68, 70, 72, 74, 76, 78, 80, 82, 84).

4. Balai d'essuie-glace selon l'une des revendications 1 à 3,
**caractérisé en ce que**
l'étrier (28, 30, 32) est monté par des tourillons (98, 100, 110, 112) des flancs (86, 88, 94, 96) dans des ouvertures (114, 116) des griffes de retenue (18).

5. Balai d'essuie-glace selon l'une des revendications 1 à 4,
**caractérisé en ce que**
les saillies (52, 54, 56, 58, 60, 62, 64, 66) comportent une rampe pour faciliter l'ouverture et/ou la fermeture des étriers (28, 30, 32) dans le sens de l'ouverture (126) et/ou dans le sens de la fermeture (128).

6. Balai d'essuie-glace selon l'une des revendications 1 à 5,
**caractérisé en ce que**
la longueur (142, 144) des saillies (52, 54, 56, 58) augmente en direction de l'extrémité libre (146, 148) des flancs (86, 88).

7. Balai d'essuie-glace selon l'une des revendications 1 à 6,
**caractérisé en ce que**
la longueur des tourillons (150, 152, 154) est supérieure à une course de ressort maximale des flancs (86, 88, 90, 92, 94, 96) au niveau des tourillons (98, 100) à l'ouverture et à la fermeture de l'étrier (28, 30, 34).

8. Balai d'essuie-glace selon l'une des revendications 1 à 7,
**caractérisé en ce que**
les flancs (86, 88, 90, 92, 94, 96) sont précontraints en position de fermeture (42) et/ou en position d'ouverture (44) et sont reliés aux griffes de retenue (18, 22, 24) par une liaison par la force.

9. Balai d'essuie-glace selon l'une des revendications précédentes,
**caractérisé en ce que**
l'étrier (28, 30, 34) est en matière plastique.
